# EUROPEAN PATENT SPECIFICATION

(11) **EP 3 335 960 B1**
(45) Date of publication and mention of the grant of the patent: **24.03.2021**
(21) Application number: 17208660.5
(22) Date of filing: 19.12.2017
(51) Int. Cl.: B61D 27/00

(54) **ROAD VEHICLE COMPRISING A SELECTIVE SEPARATION DEVICE**
STRASSENFAHRZEUG MIT SELEKTIVER TRENNVORRICHTUNG
VÉHICULE ROUTIER COMPRENANT UN DISPOSITIF DE SÉPARATION SÉLECTIVE

(30) Priority: 19.12.2016 IT 201600128183
(43) Date of publication of application: 20.06.2018
(73) Proprietor: IVECO FRANCE S.A.S., 69200 Vénissieux (FR)
(72) Inventor: GENDRE, Guy, 69003 LYON (FR)
(74) Representative: Bongiovanni, Simone

(56) References cited:
- DE-A1-102012 020 601
- JP-A- H0 214 913
- JP-A- H0 569 824
- JP-A- 2010 095 156
- US-A- 2 134 032

## Description

The present invention relates to a road vehicle, in particular a public passenger transport (PPT) vehicle.

Climate control of road vehicles for the public transport of passengers is essential in order to ensure the comfort of passengers during various climatic conditions, for example, in winter and in summer.

However, climate control of public transport vehicles has a considerable cost since it consumes a significant percentage of the fuel used by the vehicle.

In addition, there are time periods during which a vehicle may not be fully utilised, such as for example when sunshine is at its peak. In these circumstances, it is clear that climate control is a waste of fuel.

Reducing fuel consumption related to the climate control of public transport road vehicles is also an important issue in reducing pollution as well as for the operating range of battery-powered or CNG vehicles.

Examples of known climate control systems for public transport vehicles are disclosed in documents JPH0214913 A, US2134032 A, JPH0569824 A or JP2010095156 A.

The objects of this invention are to resolve the abovementioned problems.

The abovementioned objects are achieved by a road vehicle according to claim 1.

Other characteristics and advantages of the invention will become apparent from the following non-limiting description, provided for illustrative purposes, with reference to the attached drawings, in which:
- Figure 1 is a schematic perspective view which shows a road vehicle comprising a selective separation means according to the present invention; and

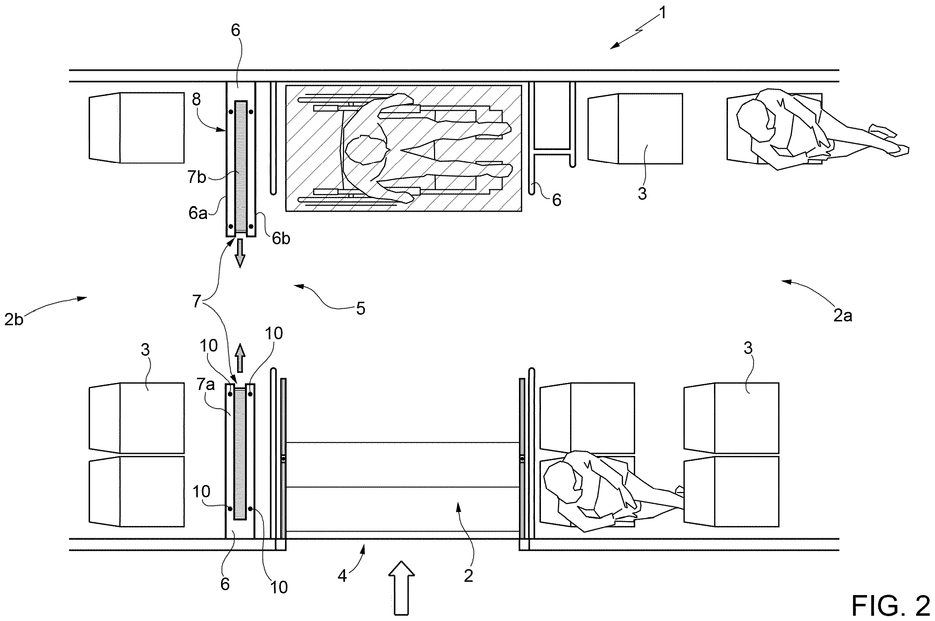

- Figure 2 is a schematic plan view of the vehicle of Figure 1.

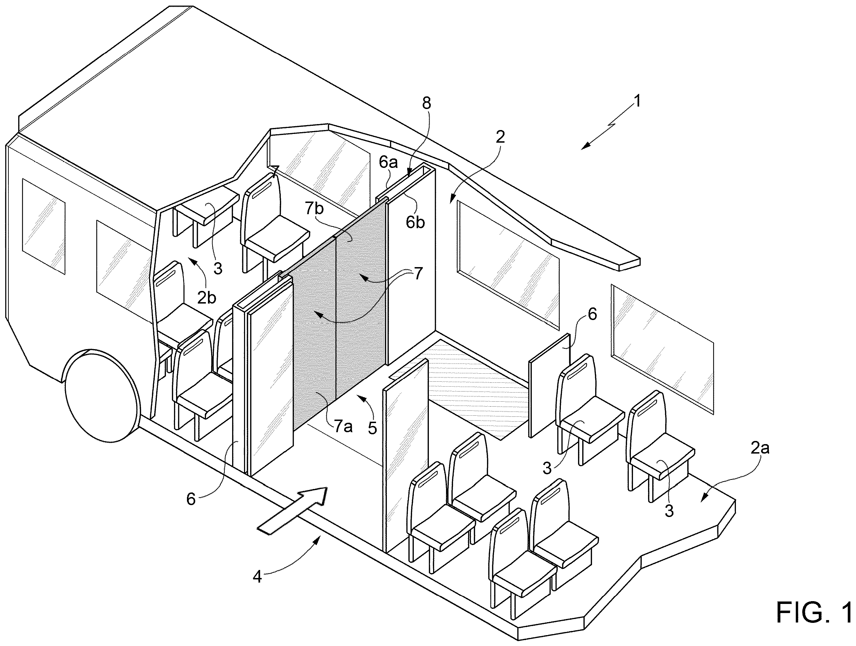

Figure 1 shows a vehicle 1 essentially comprising an internal space 2 in which a plurality of seats 3 are situated, arranged in a known way. The vehicle 1 also comprises a central entrance 4 positioned between a front entrance and a rear entrance (neither illustrated).

In the vicinity of the central entrance 4, the vehicle comprises fixed separators 6 made from transparent material such as glass or polymer, configured to separate the seats 3 from the entrance area 4, in a known way.

The vehicle 1 comprises selective separation means 5, preferably positioned in the vicinity of the central entrance 4 and configured to divide the internal space 2 of the vehicle 1 into two parts, respectively a front part 2a and a rear part 2b with respect to the selective separation means 5.

When the selective separation means 5 are closed, the two parts 2a, 2b have different levels of climate control. Indeed, in one of the two parts 2a, 2b, preferably in part 2b, the climate control system can be switched off or turned down in order to reduce fuel consumption.

The selective separation means 5 comprise a sliding door 7 which is positioned between the two separators 6 in order to divide the internal space 2 into the said two parts 2a, 2b.

The separators 6 preferably comprise a hollow space 8 between two walls 6a, 6b of the separator 6. The sliding door 7 beneficially includes at least one leaf, and preferably two leaves 7a, 7b, each movably installed inside the hollow space 8, for example by sliding means 10 such as rolling bearings or rails.

The sliding door 7 is beneficially operated by an actuator, such as an electric motor or a pneumatic cylinder.

The sliding door 7 is preferably made from transparent material such as glass or polymer. The said material is also beneficially soundproofing material so as to minimise the noise coming from the space 2b, for example the vehicle's engine noise.

The selective separation means 5 could also be connected to an air curtain of known type.

The opening or closing of the selective separation means 5 is performed either manually or, according to the invention, automatically.

Opening of the selective separation means 5 is operated manually, for example by a button (not shown) located in close proximity to the said separation means, which can be operated by the passengers themselves, or by a particular control in the vehicle's control panel which can be operated by the driver.

Alternatively, opening of the selective separation means 5 is performed automatically based on a predetermined algorithm.

According to the invention, the opening is established on the basis of a predetermined schedule. It is also possible, but not claimed, that the opening can be established on the basis of an occupancy level, for security, or for rapid evacuation.

The opening could also be established on the basis of information acquired by means of sensors (not shown) configured to acquire the number of passengers who are on board the vehicle in one of the two parts 2a, 2b.

Finally, the vehicle 1 comprises, in a known way, a climate control system (not shown) located on the roof at the centre of the vehicle 1 which manages climate control differently in the parts 2a, 2b.

The climate control system beneficially manages the circulation of a heat transfer fluid in the heat exchangers (not shown) distributed between the parts 2a and 2b. Obviously, the heat exchangers can provide heating (in winter) or cooling (in summer) and manage the relative humidity level in parts 2a, 2b.

The operation of a vehicle 1 comprising the selective separation means 5 is as follows.

When the vehicle has a low occupancy level, the sliding door 7 is closed and the climate control system manages the flow of refrigerant gas in order to reduce or eliminate climate control in part 2b. The passengers can take their places either in part 2a which is climate controlled, or in part 2b which is differently climate-controlled, as they wish.

When there are more passengers, opening of the sliding door 7 is manually or, according to the invention, automatically operated, and the climate control system provides uniform climate control of parts 2a, 2b.

From the foregoing, the benefits of a road vehicle according to claim 1 of the present invention are apparent.

Thanks to the selective separation means 5 of the internal space 2 of a PPT road vehicle 1, the climate control system can be turned down or even switched off in one of the two parts 2a, 2b into which the internal space 2 is divided, thus achieving a significant reduction in fuel consumption. Furthermore, the climate control system is more efficient since the heat exchangers provide climate control for the spaces 2a, 2b which have smaller volumes with respect to a conventional vehicle. The control of temperature and humidity is thus more precise, so that a uniform climate control in each of the two parts 2a, 2b, or else an improved anti-fogging may be achieved.

The selection separation means 5 of the vehicle's internal space 2 can also isolate the vehicle's engine, ensuring a quieter environment in one of the two parts 2a, 2b. The opening or closing of the selective separation means 5 of the internal space 1 of vehicles is according to the invention as claimed in claim 1 automated using an operational algorithm based on the specific usage of the vehicle 1.

Finally, it is apparent that the vehicle 1 according to the present invention may be subject to modifications and variations without thereby departing from the protective scope of the claims.

The selective separation means 5 of the internal space of vehicles can be achieved differently than claimed in claim 1, for example the sliding door 7 could comprise a single leaf.

The internal space 2 could also be divided into more than two parts, or the opening and closing of the said separation means 5 could be achieved differently.

## Claims

1. A road vehicle (1) for public transport of passengers comprising selective separation means (5) of the internal space (2) of the said vehicle (1) into two parts (2a, 2b), the two parts (2a, 2b) having different internal climate control, wherein the vehicle (1) comprises fixed separators (6) configured to separate the space of an entrance (4) of the vehicle (1) from seats (3) located in proximity to the said entrance (4), **characterized in that** said selective separation means (5) comprise a sliding door (7) the leaves (7a, 7b) of said door (7) being slidable inside at least one of the separators (6), the opening or closing of the said sliding door (7) is automatically operated on the basis of a scheduled time.

2. The vehicle according to claim 1, wherein the said selective separation means (5) comprise two positions, an open position and a closed position.

3. The vehicle according to claims 1 or 2, wherein the said sliding door (7) is made of transparent material.

4. The vehicle according to one that the preceding claims, wherein said transparent material is soundproofing.

## Patentansprüche

1. Straßenfahrzeug (1) für den öffentlichen Transport von Passagieren, umfassend selektive Trennmittel (5) des Innenraums (2) des Fahrzeugs (1) in zwei Teile (2a, 2b), wobei die beiden Teile (2a, 2b) eine unterschiedliche Innenklimatisierungssteuerung aufweisen, wobei das Fahrzeug (1) feststehende Trennelemente (6) umfasst, die ausgeführt sind, um den Bereich eines Eingangs (4) des Fahrzeugs (1) von Sitzen (3) trennen, die sich in der Nähe des Eingangs (4) befinden, **dadurch gekennzeichnet, dass** die selektiven Trennmittel (5) eine Schiebetür (7) umfassen, wobei die Flügel (7a, 7b) der Tür (7) innerhalb von mindestens einem der Trennelemente (6) verschiebbar sind, wobei das Öffnen oder Schließen der Schiebetür (7) automatisch auf der Basis einer geplanten Zeit betrieben wird.

2. Fahrzeug nach Anspruch 1, wobei die selektiven Trennmittel (5) zwei Stellungen umfassen, nämlich eine offene Stellung und eine geschlossene Stellung.

3. Fahrzeug nach Anspruch 1 oder 2, wobei die Schiebetür (7) aus einem transparenten Material gefertigt ist.

4. Fahrzeug nach einem der vorstehenden Ansprüche, wobei das transparente Material schallisolierend ist.

## Revendications

1. Véhicule routier (1) pour le transport public de passagers comprenant des moyens de séparation sélective (5) de l'espace interne (2) dudit véhicule (1) en deux parties (2a, 2b), les deux parties (2a, 2b) ayant une climatisation interne différente, dans lequel le véhicule (1) comprend des séparateurs fixes (6) configurés pour séparer l'espace d'une entrée (4) du véhicule (1) de sièges (3) situés à proximité de ladite entrée (4),
**caractérisé en ce que** lesdits moyens de séparation sélective (5) comprennent une porte coulissante (7) les vantaux (7a, 7b) de ladite porte (7) pouvant coulisser à l'intérieur d'au moins un des séparateurs (6), l'ouverture ou la fermeture de ladite porte coulissante (7) est actionnée automatiquement sur la base d'une heure programmée.

2. Véhicule selon la revendication 1, dans lequel lesdits moyens de séparation sélective (5) comprennent deux positions, une position ouverte et une position fermée.

3. Véhicule selon les revendications 1 ou 2, dans lequel ladite porte coulissante (7) est réalisée en matériau transparent.

4. Véhicule selon l'une des revendications précédentes, dans lequel ledit matériau transparent est insonorisant.
